# EUROPEAN PATENT APPLICATION

(11) **EP 4 844 844 A1**
(43) Date of publication of application: **25.11.2026**
(21) Application number: 26179931.6
(22) Date of filing: 20.05.2026
(51) Int. Cl.: H01M 4/90, H01M 8/1246

(54) **SOLID OXIDE ELECTROCHEMICAL CELLS WITH CHROMIUM-TOLERANT OXYGEN ELECTRODES**

(30) Priority: 22.05.2025 US 202563810411 P
(71) Applicant: Bloom Energy Corporation, San Jose, CA 95134 (US)
(72) Inventor: RAILSBACK, Justin G., San Jose, 95134 (US); ARMSTRONG, Tad, San Jose, 95134 (US)
(74) Representative: Wichmann, Hendrik

(57) **Abstract**

A solid oxide electrochemical cell includes a solid oxide electrolyte having a first side and an opposing second side, an oxygen electrode located over the first side of the solid oxide electrolyte, and a fuel electrode located over the second side of the solid oxide electrolyte. The oxygen electrode includes a lanthanide nickel ferrite perovskite material which contains at least one multivalent lanthanide element which has both 3+ and 4+ oxidation states on A-sites of the perovskite lattice, or which contains at least five different metal elements on the A-sites of the perovskite lattice. Alternatively, the oxygen electrode includes a rare earth nickel ferrite perovskite material.

## Description

### FIELD

Aspects of the present disclosure relate generally to electrochemical cells, and particularly to solid oxide electrochemical cells including chromium-tolerant oxygen electrodes.

### BACKGROUND

A typical solid oxide fuel cell includes a ceramic electrolyte located between an anode electrode and a cathode electrode. In general, thin electrolytes are desired to provide low ionic resistance. However, thin electrolytes may be damaged during stack manufacturing, reduction-oxidation cycling, and/or thermal cycling.

### SUMMARY

According to first and second embodiments, a solid oxide electrochemical cell includes a solid oxide electrolyte having a first side and an opposing second side, an oxygen electrode located over the first side of the solid oxide electrolyte, and a fuel electrode located over the second side of the solid oxide electrolyte. The oxygen electrode includes a lanthanide nickel ferrite perovskite material which contains at least one multivalent lanthanide element which has both 3+ and 4+ oxidation states on A-sites of the perovskite lattice, or which contains at least five different metal elements on the A-sites of the perovskite lattice.

According to third, fourth and fifth embodiments, a solid oxide electrochemical cell includes a solid oxide electrolyte having a first side and an opposing second side, an oxygen electrode located over the first side of the solid oxide electrolyte, and a fuel electrode located over the second side of the solid oxide electrolyte. The oxygen electrode includes a rare earth nickel ferrite perovskite material which has a formula R₁₋ₓCaₓNi_{1-y}Fe_{y}O_{3-δ} where R is Y, Gd, Sm, La or Eu, 0 ≤ x ≤ 0.5, 0.3 ≤ y ≤ 0.7 and -0.05 ≤ δ ≤ 0.05, a formula Ln₁₋ₓRₓNi_{1-y}Fe_{y}O_{3-δ}, where Ln is Gd, Sm, La or Eu, R is Y, Gd, Sm, La or Eu, 0 < x ≤ 0.5, 0.3 ≤ y ≤ 0.7 and -0.05 ≤ δ ≤ 0.05, or a formula RNi_{1-y}Fe_{y}O_{3-δ}, where R is Gd, Sm, Eu or La, 0.3 ≤ y ≤ 0.7 and -0.05 ≤ δ ≤ 0.05.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1A is a perspective view of an electrochemical stack, according to various embodiments of the present disclosure, and FIG. 1B is cross-sectional view of a portion of the stack of FIG. 1A.
FIG. 2A is a cross-sectional view of a fuel electrode supported electrochemical cell, FIG. 2B is a cross-sectional view of a co-supported electrochemical cell, and FIG. 2C is a cross-sectional view of an electrolyte electrochemical cell, according to various embodiments of the present disclosure.
FIG. 3 is a plot of entropy of mixing (Sₘᵢₓ) versus temperature which illustrates a magnitude of excess enthalpy of mixing (ΔHₘᵢₓ) for alkali earth elements and lanthanide elements.
FIG. 4A is a plot of ionic radius for various elements, and FIG. 4B is a plot of cation size difference and Goldschmidt tolerance factor for various exemplary compositions of the second embodiment of the present disclosure.

### DETAILED DESCRIPTION

The present disclosure is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough and fully conveys the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrogen (H₂) or a hydrocarbon fuel, such as methane, natural gas, pentane, ethanol, or methanol. The fuel cell operating at a typical temperature between 750°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

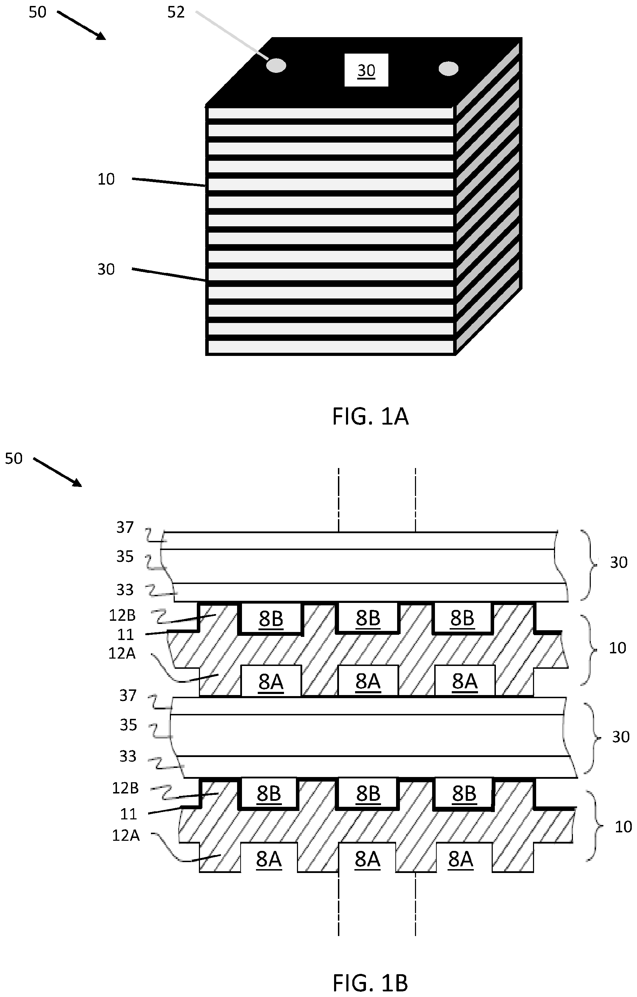

FIG. 1A is a perspective view of an electrochemical cell stack 50, and FIG. 1B is a sectional view of a portion of the stack 50, according to various embodiments of the present disclosure. In the embodiments below, the stack 50 is described as being operated as a solid oxide fuel cell (SOFC) stack 50. However, it should be noted that the stack 50 may also be operated as an electrolyzer (e.g., a solid oxide electrolyzer cell (SOEC) stack). Referring to FIGS. 1A and 1B, the stack 50 includes electrochemical cells 30, such as fuel cells (e.g., SOFCs) or electrolyzer cells (e.g., SOECs), separated by interconnects 10. In the embodiments below, the electrochemical cells 30 are described as being fuel cells. Referring to FIG. 1B, each fuel cell 30 comprises a cathode electrode 33, a solid oxide electrolyte 35, and an anode electrode 37. However, it should be noted that the electrochemical cells 30 may alternatively comprise electrolyzer cells which include a solid oxide electrolyte 35 located between an oxygen (e.g., air) electrode 33 and a fuel electrode 37.

Various materials may be used for the cathode electrode 33, electrolyte 35, and anode electrode 37. For example, the anode electrode 37 may comprise a cermet comprising a nickel containing phase and a ceramic phase. The nickel containing phase may consist entirely of nickel in a reduced state. This phase may form nickel oxide when it is in an oxidized state. Thus, the anode electrode 37 is preferably annealed in a reducing atmosphere prior to operation to reduce the nickel oxide to nickel. The nickel containing phase may include other metals in addition to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte 35 may comprise a stabilized zirconia, such as scandia stabilized zirconia (SSZ) or yttria stabilized zirconia (YSZ). Alternatively, the electrolyte 35 may comprise another ionically conductive material, such as a doped ceria.

The cathode electrode 33 may comprise an electrically conductive material, such as an electrically conductive perovskite material, such as lanthanum strontium manganite (LSM). Other conductive perovskites, such as LSCo, etc., or metals, such as Pt, may also be used. The cathode electrode 33 may also contain a ceramic phase similar to the anode electrode 37. The electrodes and the electrolyte may each comprise one or more sublayers of one or more of the above-described materials.

Electrochemical cell stacks 50 are frequently built from a multiplicity of SOFC's 30 in the form of planar elements, tubes, or other geometries. Although the fuel cell stack in FIG. 1A is vertically oriented, fuel cell stacks may be oriented horizontally or in any other direction. Fuel and air may be provided to the electrochemically active surface, which can be large. For example, fuel may be provided through fuel holes (e.g., fuel riser openings) 52 formed in each interconnect 10. The fuel holes 52 may be aligned to form fuel conduits that extend through the stack 50.

Each interconnect 10 electrically connects adjacent fuel cells 30 in the stack 50. In particular, an interconnect 10 may electrically connect the anode electrode 37 of one fuel cell 30 to the cathode electrode 33 of an adjacent fuel cell 30. FIG. 1B shows that the lower fuel cell 30 is located between two interconnects 10. An optional Ni mesh may be used to electrically connect the interconnect 10 to the anode electrode 37 of an adjacent fuel cell 30.

Each interconnect 10 includes fuel ribs 12A that at least partially define fuel channels 8A and air ribs 12B that at least partially define oxidant (e.g., air) channels 8B. The interconnect 10 may operate as a gas-fuel separator that separates a fuel, such as a hydrocarbon fuel, flowing to the fuel electrode (i.e., anode electrode 37) of one cell in the stack from oxidant, such as air, flowing to the oxygen electrode (i.e., cathode 33) of an adjacent cell in the stack.

Each interconnect 10 may be made of or may contain electrically conductive material, such as a metal alloy (e.g., chromium-iron alloy or a stainless steel, such as a ferritic stainless steel) which has a similar coefficient of thermal expansion to that of the solid oxide electrolyte in the cells (e.g., a difference of 0-10%). For example, the interconnects 10 may each include a metallic substrate comprising a high-temperature stable metal alloy, such as a chromium-iron alloy, such as 4-6 weight percent iron, optionally 1 or less weight percent yttrium and balance chromium alloy and may electrically connect the anode or fuel-side of one fuel cell 30 to the cathode or air side of an adjacent fuel cell 30. Alternatively, the interconnects 10 may comprise stainless steel or another suitable high temperature alloy. An electrically conductive contact layer, such as a nickel layer or mesh, may be provided between anode electrodes 37 and a fuel side of each interconnect 10. An electrically conductive protective layer 11, such as lanthanum strontium manganite and/or manganese cobalt spinel, may be provided on at least an air side of each interconnect 10.

Electrochemical cells, such as SOFCs and SOECs, are mechanically supported by one or more of their electrodes or electrolyte in order to increase handleability and reliability. For example, cells include electrode-supported cells, electrolyte-supported cells, and co-supported cells. Electrolyte-supported cells include a relatively thick electrolyte upon which relatively thin electrodes are formed. Electrode supported cells include a relatively thick supporting electrode (e.g., anode for a fuel cell) to provide structural support, and co-supported cells may include a relatively thick supporting electrode and a relatively thick electrolyte.

Electrolyte-supported cells offer numerous advantages including improved sealing resulting from a dense electrolyte perimeter and reduction stability due to having a thin anode. Electrode-supported SOFCs and SOECs are typically produced by co-sintering a support electrode material and a coating of electrolyte material. Electrode-supported cells include anode-supported fuel cells having a relatively thick anode and cathode-supported fuel cells having a relatively thick cathode. The terms anode and cathode are reversed for electrolyzer cells.

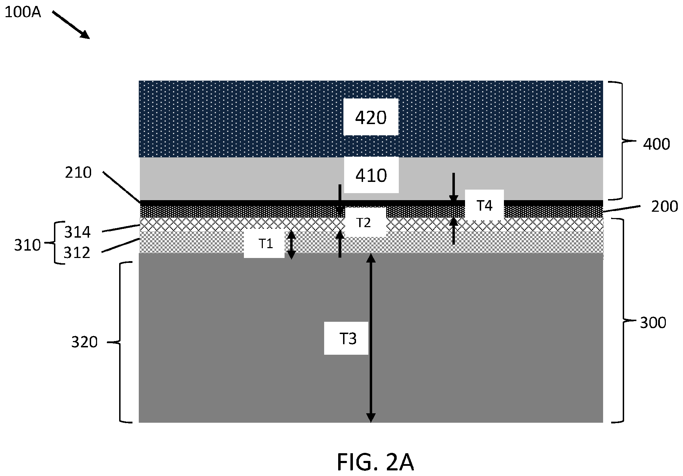

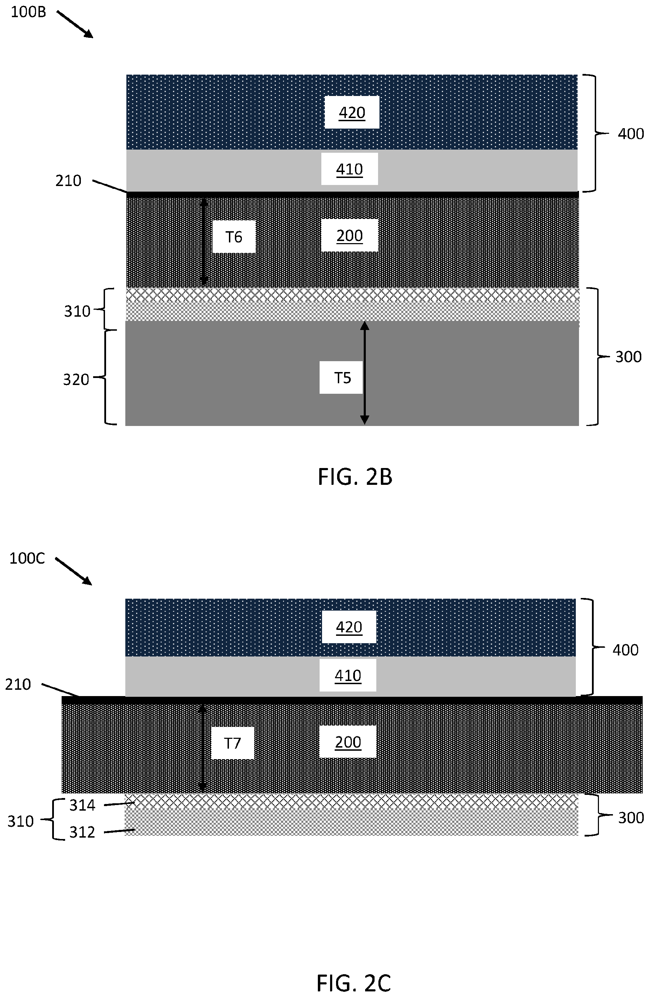

FIG. 2A is a cross-sectional view of an electrode supported electrochemical cell 100A, FIG. 2B is a cross-sectional view of a co-supported electrochemical cell 100B, and FIG. 2C is a cross-sectional view of an electrolyte supported electrochemical cell 100C, according to various embodiments of the present disclosure. The supporting electrode of cells 100A and 100B may comprise an anode electrode for a fuel cell or a cathode electrode for an electrolyzer cell. For simplicity, the fuel cell anode and the electrolyzer cell cathode will be referred to as a "fuel electrode" to which fuel or steam are supplied, respectively, during electrochemical cell operation. The opposing electrode (i.e., the fuel cell cathode and the electrolyzer cell anode) will be referred to as the "oxygen electrode" to which air is supplied during electrochemical cell operation. The oxygen electrode may also be referred to as an air electrode.

Referring to FIGS. 2A, 2B and 2C, the electrochemical cells 100A, 100B and 100C may include an electrolyte 200, a fuel electrode 300 located on a first side (e.g., fuel electrode side) of the electrolyte 200, and an oxygen electrode 400 located on a second side (e.g., oxygen electrode side) of the electrolyte 200. The electrolyte 200 may be formed of an ionically conductive ceramic material, such as a doped zirconia material or a doped ceria material. For example, the electrolyte 200 may include scandia stabilized zirconia (SSZ), yttria stabilized zirconia (YSZ), yttria-ceria-stabilized zirconia (YCSZ), ytterbia-ceria-scandia-stabilized zirconia (YbCSSZ), or blends thereof.

Preferably, the electrolyte may include YbCSSZ, wherein scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference.

The electrolyte 200 may optionally include a barrier layer 210 located on the oxygen electrode side. The barrier layer 210 may be configured to reduce or prevent diffusion of oxygen electrode materials into the electrolyte 200. For example, the barrier layer 210 may be formed of a doped ceria material, such as samaria doped ceria (SDC), gadolinia doped ceria (GDC), praseodymia doped ceria (PDC) or lanthana doped ceria (LDC). In one embodiment, the SDC may comprise Ce_{0.8}Sm_{0.2}O₂, the GDC may comprise Ce_{0.9}Gd_{0.1}O₂, the PDC may comprise Ce_{0.7}Pr_{0.3}O₂ and the LDC may comprise CeₓLa_{1-q}O₂ where 0.3 ≤ q ≤ 0.5. However, other ratios of cerium to rare earth dopant may be used. In one embodiment, the barrier layer 210 may comprise the SDC, and may have a thickness of 3 to 8 microns. In one embodiment, the barrier layer 210 may have a higher density and lower porosity than that of the electrolyte 200. In one embodiment, the barrier layer 210 may be sintered together with a cobalt nitrate sintering aid, and thus may also include a small amount (e.g., 0.1 to 1 weight percent) of cobalt or cobalt oxide.

**In** the cells 100A and 100B, the fuel electrode 300 may include a fuel electrode support 320 and an active fuel electrode 310 located between the fuel electrode support and the fuel electrode side of the electrolyte 200. The active fuel electrode 310 may include a cermet comprising a nickel containing phase and an ionically conductive ceramic phase, such as SSZ, YSZ, or YbCSSZ, and/or a doped ceria, such as gadolinia, yttria and/or samaria doped ceria, for example samaria-doped ceria (SDC). Preferably, the active fuel electrode 310 comprises a Ni-SDC cermet or a Ni-YbCSSZ cermet. In some embodiments, the Ni phase may include additional dopants, such as Mg, Ca and/or Ti to improve phase stability and/or redox tolerance. Mg may remain in oxide form (MgO) during redox events (e.g., may remain as MgO inclusions) in metallic Ni after Ni reduction. For example, the nickel containing phase of the active fuel electrode 310 may be doped with from 2 to 8 wt.%, from 3 to 8 wt.%, or from 4 to 8 mol% of MgO,

The active fuel electrode 310 may be a single or multi-layer structure. For example, the active fuel electrode 310 may include a first functionally graded electrode (FGE) layer 312 and a second FGE layer 314. The first FGE layer 312 may include a higher ratio of the nickel containing phase to the ionically conductive ceramic phase than the second FGE layer 314.

For example, the first FGE layer 312 may include 50 to 85 weight percent (e.g., 60 to 85 weight percent) of the nickel containing phase, and 15 to 50 weight percent (e.g., 15 to 40 weight percent) of the ceramic phase. The second FGE layer 314 may include 15 to 50 weight percent (e.g., 15 to 35 weight percent) of the nickel containing phase, and 50 to 85 weight percent (e.g., 65 to 85 weight percent) of the ceramic phase. The nickel containing phase may include one or more redox control dopants, such as the MgO described above. The ceramic phase may comprise any of the ceramic materials described above, such as SDC.

The first FGE layer 312 may have a thickness T1 ranging from 5 microns to 20 microns, such as from 10 microns to 15 microns. The second FGE layer 314 may have a thickness T2 ranging from 5 microns to 20 microns, such as from 5 microns to 15 microns. However, the present disclosure is not limited to any particular FGE layer thicknesses.

The fuel electrode support 320 in the cells 100A and 100B may be formed of a cermet material having a metal phase and a ceramic phase. For example, the fuel electrode support 320 may include a nickel-containing phase (e.g., nickel phase) and a ceramic phase. The nickel phase may include nickel and/or nickel alloy and may optionally include other additional metal dopants to improve phase stability and/or redox tolerance. The nickel containing phase may be formed as a nickel oxide containing phase (with or without additional redox control dopants), which is subsequently reduced to a nickel containing phase before operation of the electrochemical cell. The optional redox control dopants, such as magnesium (Mg), calcium (Ca), and/or titanium (Ti), may reduce the rate of both Ni oxidation and reduction. Ni, Ti, and Ca may be converted between oxide and metallic forms during redox events (e.g., nickel oxide, titania and/or calcium oxide in the fuel electrode may be reduced after cell fabrication and then re-oxidized after cell shut down). However, Mg may remain in oxide form (MgO) during redox events (e.g., may remain as MgO inclusions) in metallic Ni after Ni reduction. The nickel containing phase of the fuel electrode support may be doped with from 2 to 8 wt.%, from 3 to 8 wt.%, or from 4 to 8 mol% of MgO, CaO, and/or TiO₂. In other words, the doped nickel in oxide form may be represented by the formula Ni₁₋ₓDₓO₂, wherein D is a dopant selected from Mg, Ca, and Ti, and x ranges from 0.02 to 0.08.

The ceramic phase may comprise a stabilized zirconia, yttria stabilized zirconia (YSZ), scandia stabilized zirconia (SSZ), or yttria scandia stabilized zirconia (YSSZ), and/or a doped ceria material, such as gadolinia, yttria and/or samaria doped ceria. In one embodiment, the ceramic phase of the fuel electrode support 320 comprises YSZ comprising from 3 mol% to 10 mol% yttria (i.e., (3-10)-YSZ).

The oxygen electrode 400 may be located on the barrier layer 210. The oxygen electrode 400 may be a single or multi-layer structure. For example, the oxygen electrode 400 may include an oxygen electrode functional layer 410 and an oxygen electrode contact layer 420. The oxygen electrode functional layer 410 may have a thickness of 10 to 20 microns. The oxygen electrode contact layer 420 may have a thickness of 25 to 75 microns, and thus may be thicker than the oxygen electrode functional layer 410.

As shown in FIG. 2A, in the fuel electrode supported electrochemical cell 100A, the fuel electrode support 320 may have a thickness T3 ranging from 350 microns to 600 microns, such as from 300 microns to 500 microns. The electrolyte 200 may have a thickness T4 ranging from 5 microns to 15 microns, such as from 8 microns to 12 microns. Accordingly, the relatively thick fuel electrode support 320 may support the relatively thin electrolyte 200.

As shown in FIG. 2B, the co-supported electrochemical cell 100B may include a thinner fuel electrode support 320 and a thicker electrolyte 200 than in the fuel electrode supported electrochemical cell 100A. In particular, the fuel electrode support 320 may have a thickness T5 ranging from 20 microns to 100 microns, such as from 25 microns to 75 microns. The electrolyte 200 may have a thickness T6 ranging from 20 microns to 80 microns, such as from 30 microns to 70 microns. The electrolyte 200 may be thicker than, thinner than or have the same thickness as the fuel electrode support 320. The relatively thick electrolyte 200 may be self-supporting. As such, the thickness of the fuel electrode support 320 may be reduced, as compared to the fuel electrode support 320 of the cell 100A, without compromising cell strength.

As shown in FIG. 2C, the electrolyte supported electrochemical cell 100C may omit the fuel electrode support 320, and may include an electrolyte 200 that is thicker than the fuel electrode 300 or the oxygen electrode 400. In particular, the electrolyte 200 may have a thickness T7 ranging from 50 microns to 200 microns, such as from 75 microns to 125 microns. The relatively thick electrolyte 200 may be self-supporting. In the cell 100C, the fuel electrode 300 and the oxygen electrode 400 are deposited onto opposite sides of the electrolyte 200.

In a first embodiment, the oxygen electrode functional layer 410 and optionally the oxygen electrode contact layer 420 of the cells 100A, 100B or 100C comprise strontium-free materials. In one embodiment, the oxygen electrode functional layer 410 and optionally the oxygen electrode contact layer 420 comprise strontium-free and manganese-free lanthanide nickel ferrite perovskite materials. It is believed that strontium, and to a lesser extent manganese, are more reactive with chromium than nickel and iron. Therefore, the oxygen electrode 400 materials that include strontium and manganese may be susceptible to chromium poisoning from the atmosphere. For example, chromium may volatize into the stack air inlet stream from chromium-containing interconnects and/or balance of plant components of the electrochemical cell system, and may react with chromium and manganese containing oxygen electrode layers, such as LSM layers, to form one or more electrochemically inactive strontium and/or manganese chromate reaction products. The electrochemically inactive chromate reaction products undesirably reduce the cell efficiency and increase the cell resistance.

It is believed that nickel and iron have a lower reactivity with chromium than strontium and manganese. Therefore, by replacing at least strontium, and preferably both strontium and manganese, with the nickel and iron in the oxygen electrode 400 perovskite materials, it may reduce the chromium poisoning of the oxygen electrode 400 due to the lower reactivity of chromium with the nickel and iron of the oxygen electrode 400. For example, chromium or both chromium and manganese on the B-site in the perovskite crystal lattice are replaced with nickel and iron in the in the oxygen electrode functional layer 410 and optionally in the oxygen electrode contact layer 420 perovskite materials. Thus, the oxygen electrode functional layer 410 and optionally the oxygen electrode contact layer 420 comprise strontium-free or strontium and manganese-free, electrically and ionically conductive lanthanide nickel ferrite perovskite materials. Such materials are believed to have a lower chromium poisoning and area specific resistance degradation (ASRD) than lanthanum strontium manganite (LSM) materials.

The present inventors realized that while nickel on the B-site of the perovskite lattice tends to increase electrical conductivity of the perovskite material, nickel (III) ions are susceptible to being reduced to nickel (II) ions (i.e., Ni²⁺) at high temperatures, and therefore can destabilize the perovskite crystal structure. Iron on the B-site of the perovskite lattice tends to have a greater range of ferric ion (i.e., Fe³⁺) stability which does not disrupt the perovskite crystal structure. However, iron has a lower electrical conductivity than nickel. Therefore, the electrical conductivity of the perovskite material would be low if nickel was omitted from the lanthanide ferrite perovskite material and all B-site atoms comprise iron.

The present inventors realized that nickel can be retained in the perovskite material to increase its electrical conductivity if an A-site lattice element compensates the nickel reduction by having a fraction of 4+ oxidation state, and thus can increase the range of nickel stability in various perovskite compositions in a broad temperature range. Thus, in the first embodiment, the A-site of the perovskite lattice includes a multivalent lanthanide element, such as praseodymium (Pr), cerium (Ce) or neodymium (Nd), which has both the 3+ and the 4+ oxidation states. The 4+ oxidation state is strong oxidizing agent which may at least partially offset the reduction of nickel(III) (i.e., Ni³⁺) to nickel(II) (i.e., Ni²⁺) to prevent or reduce destabilization of the perovskite lattice. The A-sites of the perovskite lattice may be entirely occupied by the multivalent lanthanide elements having both 3+ and 4+ oxidation states, or may be co-doped with another lanthanide element, such as lanthanum (La), samarium (Sm), gadolinium (Gd) or europium (Eu), which have a 3+ oxidation state but no 4+ oxidation state. In addition to stability, the occupation of the A-sites in the perovskite lattice with a multivalent species, such as Pr and Ce, may increase the electrical conductivity and the ionic (e.g., oxygen-ion) conductivity.

Therefore, the present inventors believe that oxygen electrodes 400 containing a lanthanide nickel ferrite perovskite material which contains at least one multivalent lanthanide element which has both 3+ and 4+ oxidation states would be less reactive with chromium vapor due to the substitution of Cr and Mn with Ni and Fe, and the oxygen electrodes 400 would have similar electrical and ionic conductivity performance to oxygen electrodes containing lanthanum strontium manganite (LSM).

In the first embodiment, the oxygen electrode functional layer 410 may include a lanthanide nickel ferrite material having a formula Ln(M_{y}Fe_{1-y})O_{3-δ}, where Ln includes at least one multivalent lanthanide element which has both 3+ and 4+ oxidation states, M includes nickel and optionally one or more additional transition metal elements other than iron or magnesium, 0.2 ≤ y ≤ 0.8 (such as 0.4 ≤ y ≤ 0.6), and -0.05 ≤ δ ≤ 0.05. In one embodiment, δ = 0. In one embodiment M has a formula Ni_{1-z}Cu_{z} where 0 ≤ z ≤ 0.8. In one embodiment 0 < z ≤ 0.8 where the lanthanide nickel ferrite also includes copper. For example, the lanthanide nickel ferrite may have a formula Ln(Ni_{y}Fe_{1-y})O_{3-δ} or Ln(Ni_{y-z}Fe_{(1-y)-z}Cu_{z})O_{3-δ}, where 0.2 ≤ y ≤ 0.8 and 0 ≤ z ≤ 0.8.

In one embodiment, Ln comprises at least one of Pr, Ce or Nd, and the lanthanide nickel ferrite has a formula Pr(M_{y}Fe_{1-y})O_{3-δ}, Ce(M_{y}Fe_{1-y})O_{3-δ}, Nd(M_{y}Fe_{1-y})O_{3-δ}, (NdₓPr₁₋ₓ)(M_{y}Fe_{1-y})O_{3-δ}, (NdₓCe₁₋ₓ)(M_{y}Fe_{1-y})O_{3-δ}, or (CeₓPr₁₋ₓ)(M_{y}Fe_{1-y})O_{3-δ}, where 0 ≤ x ≤ 1, such as 0 < x < 1 for co-doped A-site material. In a non-limiting example, Ln comprises Pr, and the lanthanide nickel ferrite has a formula PrNi_{0.4}Fe_{0.6}O_{3-δ}.

In another embodiment, Ln comprises at least one of Pr, Ce or Nd, and at least one additional lanthanide element that has a 3+ but not a 4+ oxidation state, such as La, Sm, Gd or Eu. It is believed that co-doping the A-sites of a perovskite lattice, in particular with at least one multivalent dopant, generates more defects in the lattice and increases electrical and ionic (e.g., oxygen-ion) conductivity. The increase in electrical conductivity of the oxygen electrode 400 improves the beginning of life performance of the solid oxide electrochemical cells 100A, 100B or 100C.

In this embodiment, the lanthanide nickel ferrite has a formula (LnqₓLnr₁₋ₓ)(M_{y}Fe_{1-y})O_{3-δ}, where Lnq is lanthanide element that has a 3+ oxidation state but not a 4+ oxidation state, such as La, Sm, Gd and/or Eu; and Lnr is Pr, Ce and/or Nd, and where 0 < x ≤ 0.5, and 0.2 ≤ y ≤ 0.8. Examples of these lanthanide nickel ferrite materials include (LaₓPr₁₋ₓ)(M_{y}Fe_{1-y})O_{3-δ}, (LaₓCe₁₋ₓ)(M_{y}Fe_{1-y})O_{3-δ}, (SmₓPr₁₋ₓ)(M_{y}Fe_{1-y})O_{3-δ}, (SmₓCe₁₋ₓ)(M_{y}Fe_{1-y})O_{3-δ}, (GdₓPr₁₋ₓ)(M_{y}Fe_{1-y})O_{3-δ}, (GdₓCe₁₋ₓ)(M_{y}Fe_{1-y})O_{3-δ}, (EuₓPr₋ₓ)(M_{y}Fe_{1-y})O_{3-δ}, and (EuₓCe₁₋ₓ)(M_{y}Fe_{1-y})O_{3-δ}.

In one embodiment, the oxygen electrode functional layer 410 comprises a mixture of the above described lanthanide nickel ferrite perovskite material and a non-perovskite ionically conductive ceramic material. The non-perovskite ionically conductive ceramic material may comprise a doped ceria, such as samaria doped ceria (SDC), gadolinia doped ceria (GDC), praseodymia doped ceria (PDC) or lanthana doped ceria (LDC), or a stabilized zirconia, such as scandia stabilized zirconia (SSZ), zirconia stabilized with Sc-Ce, Sc-Ce-Y or Sc-Ce-Yb. Specific examples of the non-perovskite ionically conductive ceramic material include 89 mol % ZrO₂ - 10 mol % Sc₂ O₃ - 1 mol % CeO₂ ("10Sc1Ce"), Ce_{0.8} Sm_{0.2} O_{2-δ}, Ce_{0.8} Gd_{0.2} O_{2-δ}, Ce_{0.9} Gd_{0.1} O_{2-δ}, 88 mol % ZrO₂ - 10 mol % Sc₂ O₃ - 1 mol % Yb₂O₃ - 1 mol % CeO₂ ("10Sc1CelYb"), and 88 mol % ZrO₂ - 10 mol % Sc₂ O₃ - 1 mol % YO₃ - 1 mol % CeO₂ ("10Sc1CelY"). The weight ratio of the lanthanide nickel ferrite perovskite material to the non-perovskite ionically conductive ceramic material in the oxygen electrode functional layer 410 may be 4:6 to 6:4, such as 4.5:5.5 to 5.5:4.5.

It is believed that another possible mechanism of Cr poisoning in LSM and lanthanum strontium cobalt ferrite (LSCF) is that strontium is more available on the surfaces of these perovskite materials compared to in their bulk due to demixing, and this excess strontium on the surface more easily reacts with chromium.

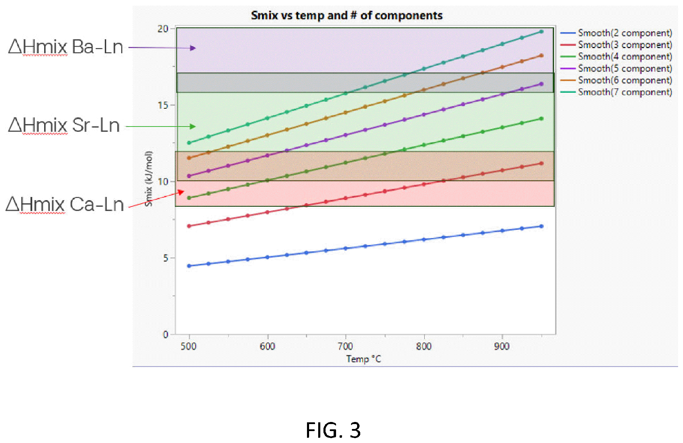

In the second embodiment, a method of entropy stabilization is provided to reduce or prevent the demixing of strontium. The magnitude of excess enthalpy of mixing (ΔHₘᵢₓ) for an alkaline earth element (e.g., strontium, calcium and barium) and a lanthanide element is calculated to be on a similar order as an entropy of mixing for 5 or more components (i.e., elements) on the A-sites of the perovskite material, as shown in FIG. 3. Pairwise (ΔHₘᵢₓ) for lanthanides is typically negative and less than 1 kL/mol.

Increasing the entropy of mixing (Sₘᵢₓ) on the A-sites of the perovskite lattice may allow for the use of alkali earth metals having a 2+ oxidation state (e.g., Ca, Sr and/or Ba) to increase the conductivity of the perovskite lanthanide nickel ferrite material by forcing charge compensation and changing the d-orbital bond length at the B-site to favor better polaron hopping. In one embodiment, the five or more various A-sites constituents should be equal in molar fraction to one another to maximize the configurational entropy effect.

Thus, in the second embodiment of the present disclosure, five or more metals are located on the A-sites of the perovskite lattice of the lanthanide nickel ferrite material of the oxygen electrode 400, such as the functional layer 410 of the oxygen electrode 400. The five or more metals include at least one lanthanide element and optionally one or more alkali earth metal elements, and/or a post-transition metal element. The lanthanide elements have a 3+ oxidation state, and include at least one of La, Sm, Pr, Ce, Nd, Gd and/or Eu. The alkali earth metals include calcium (Ca), strontium (Sr) and/or barium (Ba). The post-transition metal includes bismuth (Bi). Thus, by including at least five metals (e.g., five, six or seven) metals on the A-sites of the perovskite lattice of the lanthanide nickel ferrite material, the entropy of the material is stabilized to reduce or prevent the demixing of the alkali earth metal (e.g., strontium) to the surface of the material. This is believed to reduce chromium poisoning of the oxygen electrode 400.

In the second embodiment, the oxygen electrode functional layer 410 comprises lanthanide nickel ferrite material having at least five (e.g., 5-7) metals on the A-sites of the lattice. The at least five metals include at least one (e.g., two or more) lanthanide elements having a 3+ oxidation and optionally at least one rare earth element (e.g., Ca, Sr and/or Ba) and/or bismuth. The oxygen electrode functional layer 410 of the second embodiment may have the following formula: (nJ_{1/n})(M_{y}Fe_{1-y})O_{3-δ}, where J includes at least one lanthanide element which a 3+ oxidation state, and optionally at least one alkali earth metal selected from Ca, Sr and/or Ba, and/or optionally Bi, M includes nickel and optionally one or more additional transition metal elements, 0.2 ≤ y ≤ 0.8, 5 ≤ n ≤ 7 and -0.05 ≤ δ ≤ 0.05. In one embodiment, δ = 0. In one embodiment M has a formula Ni_{1-z}Cu_{z}, where 0 ≤ z ≤ 0.8. In one embodiment 0 < z ≤ 0.8 where the lanthanide nickel ferrite also includes copper. In one embodiment, J includes at least one of, and preferably two to four of La, Sm, Pr, Ce, Nd, Gd and/or Eu. In one embodiment, J also includes at least one of (e.g., one or two of) Ca, Sr and/or Ba alkaline earth metals. In one embodiment, J also includes bismuth (Bi) in addition to or instead of the alkaline earth metal(s). Preferably, the five or more metals J are equal in molar fraction to one another.

Table I below illustrates 11 examples A - K of the combinations of the five or more metals that may be located on the A-sites of the perovskite lattice of the lanthanide nickel ferrite.

**Table I**

| Example # | 1 | 2 | 3 | 4 | 5 | 6 | 7 |
|---|---|---|---|---|---|---|---|
| A | Sr | Sm | La | Pr | Ce | | |
| B | La | Bi | Eu | Sr | Ca | | |
| C | Nd | Pr | Ca | Ce | La | | |
| D | Bi | Sr | La | Ca | Ce | | |
| E | Gd | Eu | Sm | Nd | Pr | | |
| F | La | Nd | Sm | Ca | Sr | | |
| G | La | Pr | Sm | Ca | Sr | | |
| H | Bi | Ba | Sr | La | Ce | | |
| I | Gd | Eu | Sm | Nd | Pr | Sr | Ca |
| J | Gd | Eu | Sm | La | Pr | Sr | Ca |
| K | Gd | Ce | Sm | La | Pr | Sr | Ca |

The above examples A - K are not exhaustive, additional combinations of five or more metals bound by appropriate oxidation state, coordination, Goldschmidt tolerance factor, and cation size difference may be selected to create a stable single phase mixture.

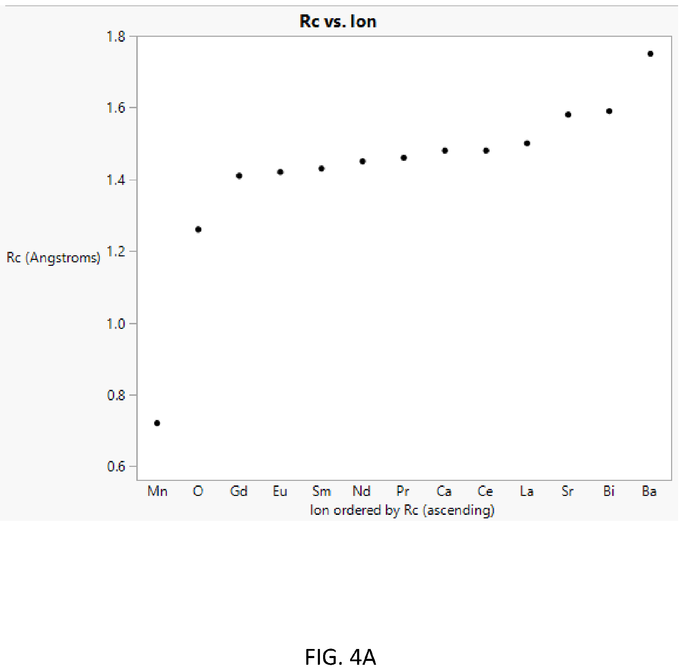

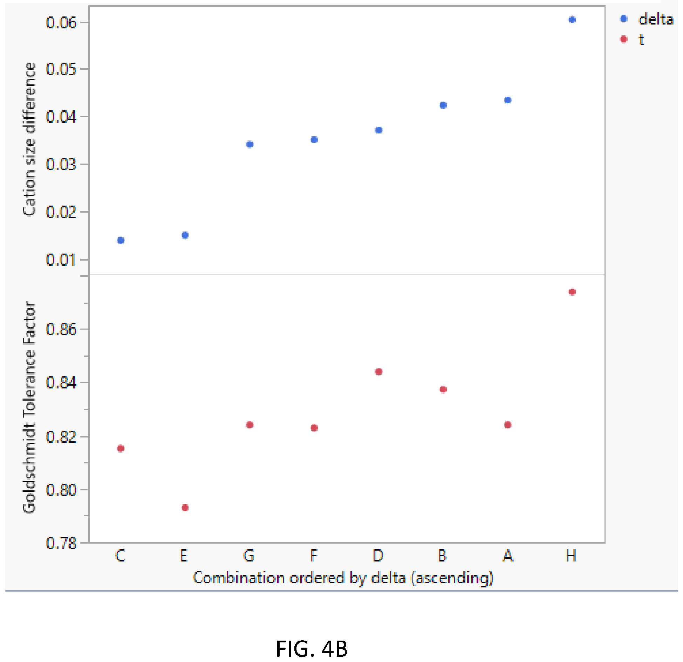

FIG. 4A illustrates the ionic radius (Rc in Angstroms) for various elements, FIG. 4B illustrates a cation size difference (delta) (upper part) and Goldschmidt tolerance factor (t) (lower part) for examples A-H (i.e., A-site metal combinations) of Table I. The cation size difference (delta) and Goldschmidt tolerance factor (t) are calculated using the following respective formulas 1 and 2:
Formula 1: $δ \left({R}_{A}\right) = \sqrt{{\sum }_{i - 1}^{N} {c}_{i} {\left(1-\frac{{R}_{A}}{\left({\sum }_{i = 1}^{N} {c}_{1} {R}_{{A}_{i}}\right)}\right)}^{2}}$
Formula 2: $1 = \frac{{r}_{A} + {r}_{O}}{\sqrt{2} \left({r}_{B}+{r}_{O}\right)}$

In the second embodiment, the oxygen electrode functional layer 410 may also include the mixture of the lanthanide nickel ferrite perovskite material and the non-perovskite ionically conductive ceramic material comprising the doped ceria or the stabilized zirconia. The weight ratio of the lanthanide nickel ferrite perovskite material to the non-perovskite ionically conductive ceramic material in the functional layer 410 may also be 4:6 to 6:4, as in the first embodiment.

In a third embodiment, the oxygen electrode functional layer 410 comprises a rare earth nickel ferrite perovskite material in which the rare earth element on the A-site of the perovskite lattice may optionally be partially replaced by calcium. The rare earth nickel ferrite material has a formula R₁₋ₓCaₓNi_{1-y}Fe_{y}O_{3-δ} where R is Y, Gd, Sm, La or Eu, 0 ≤ x ≤ 0.5, 0.3 ≤ y ≤ 0.7 and -0.05 ≤ δ ≤ 0.05. In one embodiment, δ = 0. In one embodiment, x=0. In another embodiment, 0 < x ≤ 0.5, such as 0.1 ≤ x ≤ 0.5. In one embodiment 0.4 ≤ y ≤ 0.6. Examples of these rare earth nickel ferrite materials include GdNi_{0.4}Fe_{0.6}O_{3-δ}, GdNi_{0.6}Fe_{0.4}O₃₋₆, GdNi_{0.5}Fe_{0.5}O_{3-δ}, Gd_{0.8}Ca_{0.2}Ni_{0.4}Fe_{0.6}O_{3-δ}, Gd_{0.5}Ca_{0.5}Ni_{0.5}Fe_{0.5}O_{3-δ}, SmNi_{0.4}Fe_{0.6}O_{3-δ}, SmNi_{0.5}Fe_{0.5}O₃₋₆, SmNi_{0.6}Fe_{0.4}O_{3-δ}, Sm_{0.8}Ca_{0.2}Ni_{0.4}Feₒ.₆O_{3-δ}, Sm_{0.5}Ca_{0.5}Ni_{0.4}Fe_{0.6}O_{3-δ} , YNi_{0.4}Fe_{0.6}O_{3-δ}, YNi_{0.6}Fe_{0.4}O_{3-δ}, YNi_{0.5}Fe_{0.5}O_{3-δ}, Y_{0.8}Ca_{0.2}Ni_{0.4}Fe_{0.6}O_{3-δ}, and Y_{0.5}Ca_{0.5}Ni_{0.3}Fe_{0.7}O_{3-δ}.

In a fourth embodiment, the oxygen electrode functional layer 410 comprises a rare earth nickel ferrite perovskite material in which plural rare earth elements are present on the A-site of the perovskite lattice. The rare earth nickel ferrite material has a formula Ln₁₋ₓRₓNi_{1-y}Fe_{y}O_{3-δ}, where Ln is Gd, Sm, La or Eu, R is Y, Gd, Sm, La or Eu, 0 < x ≤ 0.5, 0.3 ≤ y ≤ 0.7 and -0.05 ≤ δ ≤ 0.05. In one embodiment, Ln is different from R. In one embodiment, δ = 0. In one embodiment, 0.1 ≤ x ≤ 0.5. In one embodiment 0.4 ≤ y ≤ 0.6. Examples of these rare earth nickel ferrite materials include La₁₋ₓYₓNi_{1-y}Fe_{y}O_{3-δ} (such as La_{0.5}Y_{0.5}Ni_{0.5}Fe_{0.5}O_{3-δ} or La_{0.8}Y_{0.2}Ni_{0.6}Fe_{0.4}O_{3-δ}), La₁₋ₓGdₓNi_{1-y}Fe_{y}O_{3-δ}, and La₁₋ₓSmₓNi_{1-y}Fe_{y}O_{3-δ}.

In a fifth embodiment, the oxygen electrode functional layer 410 comprises a rare earth nickel ferrite perovskite material in which a single rare earth element having a 3+ oxidation state, such as a lanthanide element (e.g., Sm, Gd, Eu or La), is present on the A-site of the perovskite lattice. The rare earth nickel ferrite material has a formula RNi_{1-y}Fe_{y}O_{3-δ}, where R is Gd, Sm, Eu or La, 0.3 ≤ y ≤ 0.7 and -0.05 ≤ δ ≤ 0.05. In one embodiment, δ = 0. In one embodiment 0.4 ≤ y ≤ 0.6. Examples of these rare earth nickel ferrite materials include SmNi_{1-y}Fe_{y}O_{3-δ} (such as SmNi_{0.4}Fe_{0.6}O_{3-δ} or GdNi_{1-y}Fe_{y}O_{3-δ} (such as GdNi_{0.4}Fe_{0.6}O_{3-δ}). Without wishing to be bound by a particular theory, it is believed that the rare earth nickel ferrite perovskite material of the fifth embodiment is stable over a long period of time, resistant to chromium poisoning, compatible with doped ceria in the functional layer 410 and has a favorable cation migration potential.

In the third, fourth and fifth embodiments, the oxygen electrode functional layer 410 may also include the mixture of the rare earth nickel ferrite perovskite material and the non-perovskite ionically conductive ceramic material comprising the doped ceria or the stabilized zirconia. The weight ratio of the rare earth nickel ferrite perovskite material to the non-perovskite ionically conductive ceramic material in the functional layer 410 may also be 4:6 to 6:4, as in the first embodiment.

In various embodiments, the oxygen electrode contact layer 420 includes any of the lanthanide or rare earth nickel ferrite materials described in the first, second, third, fourth or fifth embodiments above for the oxygen electrode functional layer 410. In another embodiment, the oxygen electrode contact layer 420 includes lanthanum strontium manganite (LSM), such as A-site deficient (La_{0.8}Sr_{0.2})_{0.97}MnO₃. The oxygen electrode contact layer 420 may optionally exclude the non-perovskite ionically conductive ceramic material.

Any one or more features from any one or more embodiments may be used in any suitable combination with any one or more features from one or more of the other embodiments. Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.
The invention also refers to the following embodiments, wherein the term "claim" means "embodiment":
1. A solid oxide electrochemical cell, comprising:
   a solid oxide electrolyte having a first side and an opposing second side;
   an oxygen electrode located over the first side of the solid oxide electrolyte; and
   a fuel electrode located over the second side of the solid oxide electrolyte,
   wherein the oxygen electrode comprises a lanthanide nickel ferrite perovskite material which contains at least one multivalent lanthanide element which has both 3+ and 4+ oxidation states on A-sites of the perovskite lattice, or which contains at least five different metal elements on the A-sites of the perovskite lattice.
2. The solid oxide electrochemical cell of claim 1, wherein:
   the oxygen electrode comprises a contact layer and a functional layer located between the first side of the solid oxide electrolyte and the contact layer; and
   the functional layer comprises the lanthanide nickel ferrite perovskite material.
3. The solid oxide electrochemical cell of claim 2, wherein the contact layer consists essentially of the lanthanide nickel ferrite perovskite material.
4. The solid oxide electrochemical cell of claim 2, wherein the contact layer consists essentially of lanthanum strontium manganite.
5. The solid oxide electrochemical cell of claim 2, wherein:
   the functional layer further comprises a non-perovskite ionically conductive ceramic material comprising a doped ceria or a stabilized zirconia; and
   a weight ratio of the lanthanide nickel ferrite perovskite material to the non-perovskite ionically conductive ceramic material in the functional layer is 4:6 to 6:4.
6. The solid oxide electrochemical cell of claim 2, wherein the lanthanide nickel ferrite perovskite material contains the at least one multivalent lanthanide element which has both 3+ and 4+ oxidation states on A-sites of the perovskite lattice.
7. The solid oxide electrochemical cell of claim 6, wherein the lanthanide nickel ferrite perovskite material has a formula Ln(M_{y}Fe_{1-y})O_{3-δ}, where Ln comprises the at least one multivalent lanthanide element which has both 3+ and 4+ oxidation states, M comprises nickel or a combination of nickel and at least one additional transition metal element other than iron or manganese, 0.2 ≤ y ≤ 0.8, and -0.05 ≤ δ ≤ 0.05.
8. The solid oxide electrochemical cell of claim 7, wherein:
   δ = 0; and
   M has a formula Ni_{1-z}Cu_{z} where 0 ≤ z ≤ 0.8.
9. The solid oxide electrochemical cell of claim 7, wherein the lanthanide nickel ferrite perovskite material comprises Pr(M_{yF}e_{1-y})O_{3-δ}, Ce(M_{y}Fe_{1-y})O_{3-δ}, Nd(M_{y}Fe_{1-y})O_{3-δ}, (NdₓPr₁₋ₓ)(M_{y}Fe_{1-y})O_{3-δ}, (NdₓCe₁₋ₓ)(M_{y}Fe_{1-y})O_{3-δ}, or (CeₓPr₁₋ₓ)(M_{y}Fe_{1-y})O_{3-δ}, where 0 ≤ x ≤ 1.
10. The solid oxide electrochemical cell of claim 7, wherein:
   the A-sites of the lanthanide nickel ferrite perovskite material comprise at least one of Pr, Ce or Nd, and at least one of La, Sm, Gd or Eu; and
   the lanthanide nickel ferrite perovskite material has a formula (LnqₓLnr₁₋ₓ)(M_{y}Fe_{1-y})O_{3-δ}, where Lnq comprises at least one of La, Sm, Gd or Eu; and Lnr comprises at least one of Pr, Ce or Nd, and where 0 < x ≤ 0.5, 0.2 ≤ y ≤ 0.8, and -0.05 ≤ δ ≤ 0.05.
11. The solid oxide electrochemical cell of claim 2, wherein the lanthanide nickel ferrite perovskite material contains the at least five different metal elements on the A-sites of the perovskite lattice.
12. The solid oxide electrochemical cell of claim 11, wherein the at least five different metal are equal in molar fraction to one another.
13. The solid oxide electrochemical cell of claim 11, wherein the lanthanide nickel ferrite perovskite material has a formula (nJ_{1/n})(M_{y}Fe_{1-y})O_{3-δ}, where J comprises at least one lanthanide element which a 3+ oxidation state, M comprises nickel or a combination of nickel and at least one additional transition metal element other than iron or manganese, 0.2 ≤ y ≤ 0.8, 5 ≤ n ≤ 7 and -0.05 ≤ δ ≤ 0.05.
14. The solid oxide electrochemical cell of claim 13, wherein:
   δ = 0; and
   M has a formula Ni_{1-z}Cu_{z} where 0 ≤ z ≤ 0.8.
15. The solid oxide electrochemical cell of claim 14, wherein J comprises at least two of La, Sm, Pr, Ce, Nd, Gd or Eu, and at least one of Ca, Sr, Ba or Bi.
16. The solid oxide electrochemical cell of claim 15, wherein J comprises at least one of:
   (i) Sr, Sm, La, Pr and Ce;
   (ii) La, Bi, Eu, Sr and Ca;
   (iii) Nd, Pr, Ca, Ce and La;
   (iv) Bi, Sr, La, Ca and Ce;
   (v) Gd, Eu, Sm, Nd and Pr;
   (vi) La, Nd, Sm, Ca and Sr;
   (vii) La, Pr, Sm, Ca and Sr;
   (viii) Bi, Ba, Sr, La and Ce;
   (ix) Gd, Eu, Sm, Nd, Pr, Sr and Ca;
   (x) Gd, Eu, Sm, La, Pr, Sr and Ca; or
   (xi) Gd, Ce, Sm, La, Pr, Sr and Ca.
17. The solid oxide electrochemical cell of claim 2, further comprising a barrier layer located between the first side of the solid oxide electrolyte and the functional layer.
18. The solid oxide electrochemical cell of claim 1, wherein the solid oxide electrochemical cell comprises a solid oxide fuel cell.
19. The solid oxide electrochemical cell of claim 1, wherein the solid oxide electrochemical cell comprises a solid oxide electrolyzer cell.
20. An electrochemical cell stack comprising the solid oxide electrochemical cells of claim 1 separated by interconnects.
21. A solid oxide electrochemical cell, comprising:
   a solid oxide electrolyte having a first side and an opposing second side;
   an oxygen electrode located over the first side of the solid oxide electrolyte; and
   a fuel electrode located over the second side of the solid oxide electrolyte,
   wherein the oxygen electrode comprises a rare earth nickel ferrite perovskite material which has a formula R₁₋ₓCaₓNi_{1-y}Fe_{y}O_{3-δ} where R is Y, Gd, Sm, La or Eu, 0 ≤ x ≤ 0.5, 0.3 ≤ y ≤ 0.7 and -0.05 ≤ δ ≤ 0.05, or a formula Ln₁₋ₓRₓNi_{1-y}Fe_{y}O_{3-δ}, where Ln is Gd, Sm, La or Eu, R is Y, Gd, Sm, La or Eu, 0 < x ≤ 0.5, 0.3 ≤ y ≤ 0.7 and -0.05 ≤ δ ≤ 0.05, or a formula RNi_{1-y}Fe_{y}O_{3-δ}, where R is Gd, Sm, Eu or La, 0.3 ≤ y ≤ 0.7 and -0.05 ≤ δ ≤ 0.05.
22. The solid oxide electrochemical cell of claim 21, wherein the rare earth nickel ferrite perovskite material has the formula R₁₋ₓCaₓNi_{1-y}Fe_{y}O_{3-δ}.
23. The solid oxide electrochemical cell of claim 22, wherein 0 < x ≤ 0.5.
24. The solid oxide electrochemical cell of claim 21, wherein the rare earth nickel ferrite perovskite material has the formula Ln₁₋ₓRₓNi_{1-y}Fe_{y}O_{3-δ}, and Ln is different from R.
25. The solid oxide electrochemical cell of claim 24, wherein the rare earth nickel ferrite perovskite material has the formula La₁₋ₓYₓNi_{1-y}Fe_{y}O_{3-δ}, La₁₋ₓGdₓNi_{1-y}Fe_{y}O_{3-δ}, or La₁₋ₓSmₓNi_{1-y}Fe_{y}O_{3-δ}.
26. The solid oxide electrochemical cell of claim 21, wherein the rare earth nickel ferrite perovskite material has the formula RNi_{1-y}Fe_{y}O_{3-δ}, where R is Gd, Sm, Eu or La, 0.3 ≤ y ≤ 0.7 and -0.05 ≤ δ ≤ 0.05.

## Claims

1. A solid oxide electrochemical cell, comprising:
a solid oxide electrolyte having a first side and an opposing second side;
an oxygen electrode located over the first side of the solid oxide electrolyte; and
a fuel electrode located over the second side of the solid oxide electrolyte,
wherein the oxygen electrode comprises:
(i) a lanthanide nickel ferrite perovskite material which contains at least one multivalent lanthanide element which has both 3+ and 4+ oxidation states on A-sites of the perovskite lattice; or
(ii) a lanthanide nickel ferrite perovskite material which contains at least five different metal elements on the A-sites of the perovskite lattice; or
(iii) a rare earth nickel ferrite perovskite material which has a formula R₁₋ₓCaₓNi_{1-y} Fe_{y}O_{3-δ} where R is Y, Gd, Sm, La or Eu, 0 ≤ x ≤ 0.5, 0.3 ≤ y ≤ 0.7 and -0.05 ≤ δ ≤ 0.05; or
(iv) a rare earth nickel ferrite perovskite material which has a formula Ln₁₋ₓRₓNi_{1-y}Fe_{y}O_{3-δ}, where Ln is Gd, Sm, La or Eu, R is Y, Gd, Sm, La or Eu, 0 < x ≤ 0.5, 0.3 ≤ y ≤ 0.7 and -0.05 ≤ δ ≤ 0.05; or
(v) a rare earth nickel ferrite perovskite material which has a formula RNi_{1-y}Fe_{y} O_{3-δ}, where R is Gd, Sm, Eu or La, 0.3 ≤ y ≤ 0.7 and -0.05 ≤ δ ≤ 0.05.

2. The solid oxide electrochemical cell of claim 1, wherein:
the oxygen electrode comprises a contact layer and a functional layer located between the first side of the solid oxide electrolyte and the contact layer; and
the functional layer comprises the lanthanide nickel ferrite perovskite material.

3. The solid oxide electrochemical cell of claim 2, wherein:
the contact layer consists essentially of the lanthanide nickel ferrite perovskite material or consists essentially of lanthanum strontium manganite;
the functional layer further comprises a non-perovskite ionically conductive ceramic material comprising a doped ceria or a stabilized zirconia; and
a weight ratio of the lanthanide nickel ferrite perovskite material to the non-perovskite ionically conductive ceramic material in the functional layer is 4:6 to 6:4.

4. The solid oxide electrochemical cell of claim 2, wherein the oxygen electrode comprises the lanthanide nickel ferrite perovskite material that contains the at least one multivalent lanthanide element which has both 3+ and 4+ oxidation states on A-sites of the perovskite lattice.

5. The solid oxide electrochemical cell of claim 4, wherein the lanthanide nickel ferrite perovskite material has a formula Ln(M_{y}Fe_{1-y})O_{3-δ}, where Ln comprises the at least one multivalent lanthanide element which has both 3+ and 4+ oxidation states, M comprises nickel or a combination of nickel and at least one additional transition metal element other than iron or manganese, 0.2 ≤ y ≤ 0.8, and -0.05 ≤ δ ≤ 0.05.

6. The solid oxide electrochemical cell of claim 5, wherein the lanthanide nickel ferrite perovskite material comprises Pr(M_{y}Fe_{1-y})O_{3-δ}, Ce(M_{y}Fe_{1-y})O_{3-δ}, Nd(M_{y}Fe_{1-y})O_{3-δ}, (NdₓPr₁₋ₓ)(M_{y}Fe_{1-y})O_{3-δ}, (NdₓCe₁₋ₓ)(M_{y}Fe_{1-y})O_{3-δ}, or (CeₓPr₁₋ₓ)(M_{y}Fe_{1-y})O_{3-δ}, where 0 ≤ x ≤ 1.

7. The solid oxide electrochemical cell of claim 5, wherein:
the A-sites of the lanthanide nickel ferrite perovskite material comprise at least one of Pr, Ce or Nd, and at least one of La, Sm, Gd or Eu; and
the lanthanide nickel ferrite perovskite material has a formula (LnqₓLnr₁₋ₓ)(M_{y}Fe_{1-y})O_{3-δ}, where Lnq comprises at least one of La, Sm, Gd or Eu; and Lnr comprises at least one of Pr, Ce or Nd, and where 0 < x ≤ 0.5, 0.2 ≤ y ≤ 0.8, and -0.05 ≤ δ ≤ 0.05.

8. The solid oxide electrochemical cell of claim 2, wherein the oxygen electrode comprises the lanthanide nickel ferrite perovskite material that contains the at least five different metal elements on the A-sites of the perovskite lattice.

9. The solid oxide electrochemical cell of claim 2, further comprising a barrier layer located between the first side of the solid oxide electrolyte and the functional layer.

10. The solid oxide electrochemical cell of claim 1, wherein the solid oxide electrochemical cell comprises a solid oxide fuel cell or a solid oxide electrolyzer cell.

11. The solid oxide electrochemical cell of claim 1, wherein the oxygen electrode comprises the rare earth nickel ferrite perovskite material which has the formula R₁₋ₓCaₓNi_{1-y} Fe_{y}O_{3-δ} where R is Y, Gd, Sm, La or Eu, 0 ≤ x ≤ 0.5, 0.3 ≤ y ≤ 0.7 and -0.05 ≤ δ ≤ 0.05.

12. The solid oxide electrochemical cell of claim 1, wherein the oxygen electrode comprises the rare earth nickel ferrite perovskite material which has the formula Ln₁₋ₓRₓNi_{1-y}Fe_{y}O_{3-δ}, where Ln is Gd, Sm, La or Eu, R is Y, Gd, Sm, La or Eu, 0 < x ≤ 0.5, 0.3 ≤ y ≤ 0.7 and -0.05 ≤ δ ≤ 0.05.

13. The solid oxide electrochemical cell of claim 12, wherein Ln is different from R.

14. The solid oxide electrochemical cell of claim 1, wherein the oxygen electrode comprises the rare earth nickel ferrite perovskite material which has a formula RNi_{1-y}Fe_{y} O_{3-δ}, where R is Gd, Sm, Eu or La, 0.3 ≤ y ≤ 0.7 and -0.05 ≤ δ < 0.05.

15. An electrochemical cell stack comprising the solid oxide electrochemical cells of claim 1 separated by interconnects.
